# EUROPEAN PATENT APPLICATION

(11) **EP 2 869 505 A1**
(43) Date of publication of application: **06.05.2015**
(21) Application number: 14763065.1
(22) Date of filing: 10.03.2014
(51) Int. Cl.: H04L 12/701

(54) **MESSAGE FORWARDING METHOD FOR MULTI-SERVICE BEARER NETWORK DEVICE AND DEVICE THEREOF**

(30) Priority: 11.03.2013 CN 201310075929
(71) Applicant: ZTE Corporation, Guangdong Province 518057 (CN)
(72) Inventor: LI, Jihong, Shenzhen City Guangdong Province 518057 (CN); ZOU, Xujun, Shenzhen City Guangdong Province 518057 (CN)
(74) Representative: Novagraaf Technologies
(86) International application number: PCT/CN2014/073131
(87) International publication number: WO 2014/139385

(57) **Abstract**

A message forwarding method for a multi-service bearer network device and a device thereof are provided, wherein the method includes: determining an ingress flow point and a service attribute thereof according to a service attribute of a received message; judging a protection state of the ingress flow point, and when the protection state of the ingress flow point is receiving message and the attribute of the ingress flow point comprises a forwarding action, searching for a preset message forwarding table according to the service attribute of the ingress flow point and content of the received message to obtain an egress flow point of a client layer; obtaining the egress flow point of the client layer and an egress flow point of a service layer which has a nested relationship with the egress flow point of the client layer, and obtaining an egress port according to the nested relationship and the protection state of the egress flow point of the client layer; and transmitting the received message to the egress port.

## Description

### Technical Field

The present invention relates to the field of message forwarding for a network device, and in particular, to a message forwarding method for a multi-service bearer network device and a device thereof.

### Background of the Related Art

There are many types of services processed by a multi-service bearer network device, including Ethernet service messages, Circuit Emulation Service (CES) messages and Multi-Protocol Label Switching (MPLS) service messages, which support applications such as Layer 2 Virtual Private Network (L2VPN) and Layer 3 Virtual Private Network (L3VPN). The forwarding of multiple types of services are not only based on a port or a port plus a Virtual Local Area Network (VLAN), but also based on a label or a VLAN plus a label. Thus, the multi-service bearer network device has features such as complex service forwarding modes and many layers. In the related art, there is no unified model which can describe processes of forwarding different types of services.

### Summary of the Invention

The embodiments of the present invention provide a message forwarding method for a multi-service bearer network device and a device thereof, to solve the technical problem of how to describe processes of forwarding different types of services in a unified manner.

The embodiments of the present invention provide a message forwarding method for a multi-service bearer network device, comprising:
determining an ingress flow point and a service attribute thereof according to a service attribute of a received message;
judging a protection state of the ingress flow point, and when the protection state of the ingress flow point is receiving message and the attribute of the ingress flow point comprises a forwarding action, searching a preset message forwarding table according to the service attribute of the ingress flow point and content of the received message to obtain an egress flow point of a client layer;
obtaining the egress flow point of the client layer and an egress flow point of a service layer which has a nested relationship with the egress flow point of the client layer, and obtaining an egress port according to the nested relationship and the protection state of the egress flow point of the client layer; and
transmitting the received message to the egress port.

Alternatively, determining an ingress flow point and a service attribute thereof according to a service attribute of a received message comprises:
determining a service attribute of a service borne by the message according to a port number of the received message and/or content of the message; and
determining the ingress flow point and the service attribute of the ingress flow point according to the service attribute.

Alternatively, judging a protection state of the ingress flow point comprises:
obtaining a state of a work channel or a state of a protection channel of the ingress flow point, and when a message enters the work channel of the ingress flow point and the state of the work channel is receiving, the work channel of the ingress flow point is in a receiving message state, and when the message enters the work channel of the ingress flow point and the state of the work channel is not receiving, the work channel of the ingress flow point is in a discarding received message state; and when the message enters the protection channel of the ingress flow point, and the state of the protection channel is receiving, the protection channel of the ingress flow point is in a receiving message state, and when the message enters the protection channel of the ingress flow point and the state of the protection channel is not receiving, the protection channel of the ingress flow point is in a discarding received message state.

Alternatively, obtaining an egress port according to the nested relationship and the protection state of the egress flow point of the client layer comprises:
if the egress flow point as the client layer points to the egress flow point as the service layer, and the protection state of the egress flow point of the client layer is transmitting message, searching a preset egress port table to obtain the egress port.

The embodiments of the present invention further provide a multi-service bearer network device for forwarding a message, comprising an ingress flow point module, a forwarding module, and an egress flow point module, wherein,
the ingress flow point module is configured to determine an ingress flow point and a service attribute thereof according to a service attribute of a received message, judge a protection state of the ingress flow point, and when the protection state of the ingress flow point is receiving message and the attribute of the ingress flow point comprises a forwarding action, transmit the service attribute of the ingress flow point and the received message to the forwarding module;
the forwarding module is configured to search a preset message forwarding table according to the service attribute of the ingress flow point and content of the received message to obtain an egress flow point of a client layer, and notify the egress flow point of the client layer to the egress flow point module; and
the egress flow point module is configured to obtain the egress flow point of the client layer and an egress flow point of a service layer which has a nested relationship with the egress flow point of the client layer, obtain an egress port according to the nested relationship and the protection state of the egress flow point of the client layer, and transmit the received message to the egress port.

Alternatively, the ingress flow point module determines an ingress flow point and a service attribute thereof according to a service attribute of a received message by the following way:
the ingress flow point module is configured to determine a service attribute of a service borne by the message according to a port number of the received message and/or content of the message, and determine the ingress flow point and the service attribute of the ingress flow point according to the service attribute.

Alternatively, the ingress flow point module judges a protection state of the ingress flow point by the following way:
the ingress flow point module is configured to obtain a state of a work channel or a state of a protection channel of the ingress flow point, and when a message enters the work channel of the ingress flow point and the state of the work channel is receiving, the work channel of the ingress flow point is in a receiving message state, and when the message enters the work channel of the ingress flow point and the state of the work channel is not receiving, the work channel of the ingress flow point is in a discarding received message state; and when the message enters the protection channel of the ingress flow point, and the state of the protection channel is receiving, the protection channel of the ingress flow point is in a receiving message state, and when the message enters the protection channel of the ingress flow point and the state of the protection channel is not receiving, the protection channel of the ingress flow point is in a discarding received message state.

Alternatively, the egress flow point module obtains an egress port according to the nested relationship and the protection state of the egress flow point of the client layer by the following way:
the egress flow point module is configured to, when the egress flow point as the client layer points to the egress flow point as the service layer, and the protection state of the egress flow point of the client layer is transmitting message, searching a preset egress port table to obtain the egress port.

In the above technical schemes, a process of forwarding different types of services is described in an abstract and unified model, which simplifies levels for forwarding multiple types of services.

### Brief Description of Drawings

Fig. 1 is a flowchart of a message forwarding method for a multi-service bearer network device according to the present embodiment; and
Fig. 2 is a modular diagram of constitution of a multi-service bearer network device according to the present embodiment.

### Preferred Embodiments of the Present Invention

The embodiments of the present invention will be described in detail below in conjunction with accompanying drawings. It should be illustrated that without conflict, the embodiments in the present application and the features in the embodiments could be combined with each other randomly.

Before describing the embodiments of the present invention, a technical feature "flow point" in the embodiments of the present invention will be described:
a flow point is an abstract service flow descriptor, and a logic node which is on the upstream of a service process flow; and a service is forwarded by establishing a connection relationship between flow points;
in terms of described service types, the flow point may be divided into a User Network Interface (UNI) side flow point, a Network Node Interface (NNI) side flow point, a multicast flow point, and other flow points, wherein,
the UNI side flow point includes an Ethernet access service interface (L2/L3), and a Circuit Emulation Service (CES) interface;
the NNI side flow point includes a tunnel level flow point, a pseudo wire level flow point and segment level flow point;
the NNI side tunnel level flow point includes a tunnel forwarding virtual interface and a tunnel termination virtual interface;
the NNI side pseudo wire level flow point includes a pseudo wire forwarding virtual interface and a pseudo wire termination virtual interface;
the NNI side segment level flow point includes a segment forwarding virtual interface and a segment termination virtual interface; and
the multicast flow point includes a Multicast flow point and a broadcast flow point.

A flow point for receiving a message is an ingress flow point, and a flow point for transmitting a message is an egress flow point; and the same flow point may not only be used as an ingress flow point, but also be used as an egress flow point.

The flow point may be nested, i.e., in an ingress direction, a flow point of a service layer points to a flow point of a client layer, and in an egress direction, the flow point of the client layer points to the flow point of the service layer.

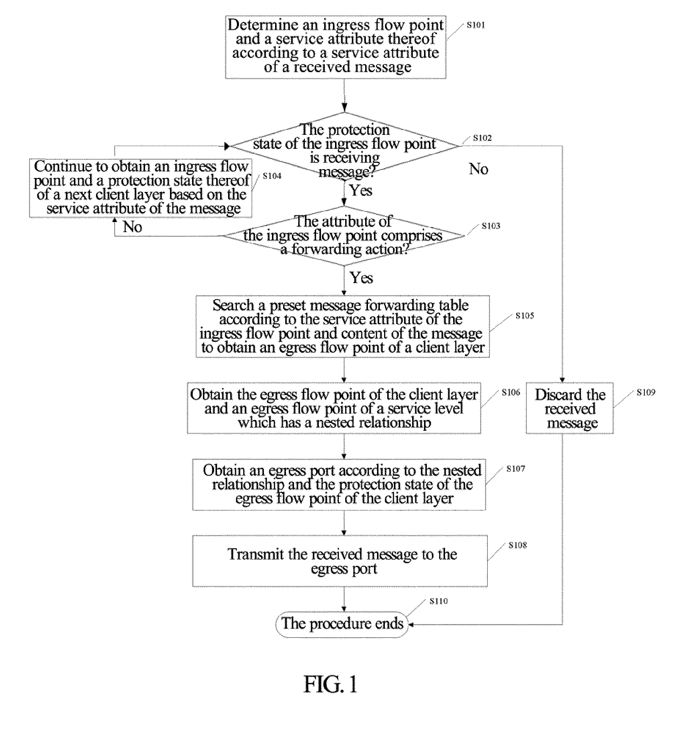

Fig. 1 is a flowchart of a message forwarding method for a multi-service bearer network device according to the present embodiment.

In S101, an ingress flow point and a service attribute thereof are determined according to a service attribute of a received message.

After receiving the message, a service attribute of a service borne by the message may firstly be determined according to a port number of the message and/or content of the message; and then the ingress flow point and the service attribute of the ingress flow point are determined according to the service attribute.

In S102, it is judged whether a protection state of the ingress flow point is receiving message, and if so, the message will be received, and step S103 will be performed; otherwise, step S109 will be performed;

Judging the protection state of the ingress flow point includes:
obtaining a state of a work channel or a state of a protection channel of the ingress flow point, and when a message enters the work channel of the ingress flow point and the state of the work channel is receiving, the work channel of the ingress flow point is in a receiving message state, otherwise, the work channel of the ingress flow point is in a discarding received message state; and when the message enters the protection channel of the ingress flow point, and the state of the protection channel is receiving, the protection channel of the ingress flow point is in a receiving message state, otherwise, the protection channel of the ingress flow point is in a discarding received message state.

In S103, it is judged whether the attribute of the ingress flow point comprises a forwarding action, and if so, step S105 will be performed; otherwise, the procedure continues to perform step S104;

In S104, an ingress flow point and a protection state thereof of a next client layer will continue to be obtained based on the service attribute of the message, and step S102 will be performed;

In S105, a preset message forwarding table is searched for according to the service attribute of the ingress flow point and content of the message to obtain an egress flow point of a client layer;

The forwarding table records a correspondence among the service attribute of the ingress flow point, the content of the message, and the egress flow point.

In S106, the egress flow point of the client layer and an egress flow point of a service layer which has a nested relationship with the egress flow point of the client layer are obtained.

In S107, an egress port is obtained according to the nested relationship and the protection state of the egress flow point of the client layer.

If the egress flow point as the client layer points to the egress flow point as the service layer, and a protection state of the egress flow point of the client layer is transmitting message, a preset egress port table is searched for to obtain the egress port.

In S108, the received message is transmitted to the egress port, and step S108 will be performed.

In S109, the received message is discarded.

In S110, the procedure ends.

The above embodiment will be described in detail below by taking a specific multi-segment pseudo wire as an application example.

In step 1, an MPLS message is received.

In step 2, an ingress tunnel flow point and a service attribute thereof are determined according to an outer label (LSP label) of the received message, and for a multi-segment pseudo wire service, the ingress tunnel flow point comprises a termination action; and at the same time, a work channel or a protection channel of the message from the ingress tunnel flow point is acquired.

In step 3, when it is acquired that the state of the operation/protection channel of the tunnel flow point is receiving, step 4 will be performed; otherwise, step 10 will be performed.

In step 4, as the ingress tunnel flow point comprises a termination action, the ingress pseudo wire flow point and the service attribute thereof continue to be obtained according to an inner label (PW label) of the received message, to acquire that the attribute of the ingress pseudo wire flow point comprises a forwarding action; and at the same time, a work channel or a protection channel of the message from the ingress pseudo wire flow point is acquired.

In step 5, when it is acquired that the state of the operation/protection channel of the pseudo wire flow point is receiving, step 6 will be performed; otherwise, step 10 will be performed.

In step 6, as the attribute of the ingress pseudo wire flow point comprises a forwarding action, a preset message forwarding table is searched for according to the ingress pseudo wire flow point to obtain an egress pseudo wire flow point of a client layer.

In step 7, the egress pseudo wire flow point of the client layer and an egress tunnel flow point of a service layer which has a nested relationship with the egress pseudo wire flow point of the client layer are obtained.

In step 8, an egress port is obtained according to the nested relationship and the protection state of the egress pseudo wire flow point of the client layer.

In step 9, the received message is transmitted to the egress port, to complete message forwarding, and step 11 will be performed.

In step 10, the message is discarded, and step 11 will be performed.

In step 11, the procedure ends.

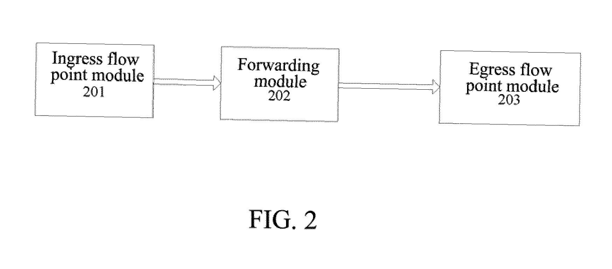

Fig. 2 is a modular diagram of constitution of a multi-service bearer network device according to the present embodiment.

The network device comprises an ingress flow point module 201, a forwarding module 202, and an egress flow point module 203, wherein,
the ingress flow point module 201 is configured to determine an ingress flow point and a service attribute thereof according to a service attribute of a received message, judge a protection state of the ingress flow point, and when the protection state of the ingress flow point is receiving message and the attribute of the ingress flow point comprises a forwarding action, transmit the service attribute of the ingress flow point and the received message to the forwarding module 202;
the ingress flow point module 201 may determine a service attribute of a service borne by the message according to a port number of the received message and/or content of the message, and determine the ingress flow point and the service attribute of the ingress flow point according to the service attribute.
the ingress flow point module 201 may judge a protection state of the ingress flow point by the following way: obtaining a state of a work channel or a state of a protection channel of the ingress flow point, and when a message enters the work channel of the ingress flow point and the state of the work channel is receiving, the work channel of the ingress flow point is in a receiving message state, otherwise, the work channel of the ingress flow point is in a discarding received message state; and when the message enters the protection channel of the ingress flow point, and the state of the protection channel is receiving, the protection channel of the ingress flow point is in a receiving message state, otherwise, the protection channel of the ingress flow point is in a discarding received message state.
the forwarding module 202 is configured to search a preset message forwarding table according to the service attribute of the ingress flow point and content of the received message to obtain an egress flow point of a client layer, and notify the egress flow point of the client layer to the egress flow point module 203; and
the egress flow point module 203 is configured to obtain the egress flow point of the client layer and an egress flow point of a service layer which has a nested relationship with the egress flow point of the client layer, obtain an egress port according to the nested relationship and the protection state of the egress flow point of the client layer, and transmit the received message to the egress port.
the egress flow point module 203 is configured to: when the egress flow point as the client layer points to the egress flow point as the service layer, and a protection state of the egress flow point of the client layer is transmitting message, searching a preset egress port table to obtain the egress port.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, each module/unit in the above embodiments can be implemented in a form of hardware, or can also be implemented in a form of software functional module. The present invention is not limited to any particular form of a combination of hardware and software.

It should be illustrated that, the present invention can also have a plurality of other embodiments. Those skilled in the related art can make various corresponding modifications and variations according to the present invention, without departing from the spirit and essence thereof of the present invention, while all these corresponding modifications and variations should belong to the protection scope of the appended claims of the present invention.

### Industrial Applicability

In the above technical schemes, a process of forwarding different types of services is described in an abstract and unified model, which simplifies levels for forwarding multiple types of services.

## Claims

1. A message forwarding method for a multi-service bearer network device, comprising:
determining an ingress flow point and a service attribute of the ingress flow point according to a service attribute of a received message;
judging a protection state of the ingress flow point, and when the protection state of the ingress flow point is receiving message and the attribute of the ingress flow point comprises a forwarding action, searching a preset message forwarding table according to the service attribute of the ingress flow point and content of the received message to obtain an egress flow point of a client layer;
obtaining the egress flow point of the client layer and an egress flow point of a service layer which has a nested relationship with the egress flow point of the client layer, and obtaining an egress port according to the nested relationship and the protection state of the egress flow point of the client layer; and
transmitting the received message to the egress port.

2. The method according to claim 1, wherein, determining an ingress flow point and a service attribute of the ingress flow point according to a service attribute of a received message comprises:
determining a service attribute of a service borne by the message according to a port number of the received message and/or content of the message; and
determining the ingress flow point and the service attribute of the ingress flow point according to the service attribute.

3. The method according to claim 1 or 2, wherein, judging a protection state of the ingress flow point comprises:
obtaining a state of a work channel or a state of a protection channel of the ingress flow point, and when a message enters the work channel of the ingress flow point and the state of the work channel is receiving, the work channel of the ingress flow point is in a receiving message state, and when the message enters the work channel of the ingress flow point and the state of the work channel is not receiving, the work channel of the ingress flow point is in a discarding received message state; and when the message enters the protection channel of the ingress flow point, and the state of the protection channel is receiving, the protection channel of the ingress flow point is in a receiving message state, and when the message enters the protection channel of the ingress flow point and the state of the protection channel is not receiving, the protection channel of the ingress flow point is in a discarding received message state.

4. The method according to claim 3, wherein, obtaining an egress port according to the nested relationship and the protection state of the egress flow point of the client layer comprises:
if the egress flow point as the client layer points to the egress flow point as the service layer, and the protection state of the egress flow point of the client layer is transmitting message, searching a preset egress port table to obtain the egress port.

5. A multi-service bearer network device for forwarding a message, comprising an ingress flow point module, a forwarding module, and an egress flow point module, wherein,
the ingress flow point module is configured to determine an ingress flow point and a service attribute of the ingress flow point according to a service attribute of a received message, judge a protection state of the ingress flow point, and when the protection state of the ingress flow point is receiving message and the attribute of the ingress flow point comprises a forwarding action, transmit the service attribute of the ingress flow point and the received message to the forwarding module;
the forwarding module is configured to search a preset message forwarding table according to the service attribute of the ingress flow point and content of the received message to obtain an egress flow point of a client layer, and notify the egress flow point of the client layer to the egress flow point module; and
the egress flow point module is configured to obtain the egress flow point of the client layer and an egress flow point of a service layer which has a nested relationship with the egress flow point of the client layer, obtain an egress port according to the nested relationship and the protection state of the egress flow point of the client layer, and transmit the received message to the egress port.

6. The network device according to claim 5, wherein,
the ingress flow point module determines an ingress flow point and a service attribute of the ingress flow point according to a service attribute of a received message by the following way:
the ingress flow point module is configured to determine a service attribute of a service borne by the message according to a port number of the received message and/or content of the message, and determine the ingress flow point and the service attribute of the ingress flow point according to the service attribute.

7. The network device according to claim 5 or 6, wherein,
the ingress flow point module judges a protection state of the ingress flow point by the following way:
the ingress flow point module is configured to obtain a state of a work channel or a state of a protection channel of the ingress flow point, and when a message enters the work channel of the ingress flow point and the state of the work channel is receiving, the work channel of the ingress flow point is in a receiving message state, and when the message enters the work channel of the ingress flow point and the state of the work channel is not receiving, the work channel of the ingress flow point is in a discarding received message state; and when the message enters the protection channel of the ingress flow point, and the state of the protection channel is receiving, the protection channel of the ingress flow point is in a receiving message state, and when the message enters the protection channel of the ingress flow point and the state of the protection channel is not receiving, the protection channel of the ingress flow point is in a discarding received message state.

8. The network device according to claim 7, wherein,
the egress flow point module obtains an egress port according to the nested relationship and the protection state of the egress flow point of the client layer by the following way:
the egress flow point module is configured to, when the egress flow point as the client layer points to the egress flow point as the service layer, and the protection state of the egress flow point of the client layer is transmitting message, searching a preset egress port table to obtain the egress port.
